# EUROPEAN PATENT SPECIFICATION

(11) **EP 1 462 475 B1**
(45) Date of publication and mention of the grant of the patent: **03.08.2005**
(21) Application number: 04251812.6
(22) Date of filing: 26.03.2004
(51) Int. Cl.: C08K 3/26, C08K 9/02, C01F 7/00

(54) **Mg-Zn-Al based hydrotalcite-type particles and resin composition containing the same**
Hydrotalcit-Teilchen auf Basis von Mg-Zn-Al sowie diese enthaltende Harzzusammensetzung
Particules d'hydrotalcite à base de Mg-Zn-Al et composition de résine les contenant

(30) Priority: 28.03.2003 JP 2003092557
(43) Date of publication of application: 29.09.2004
(73) Proprietor: Toda Kogyo Corporation, Hiroshima-shi, Hiroshima-ken (JP)
(72) Inventor: Kobayashi, Naoya, Saeki-ku, Hiroshima-shi, Hiroshima-ken (JP); Honmyo, Torayuki, Otake-shi, Hiroshima-ken (JP)
(74) Representative: Woods, Geoffrey Corlett

(56) References cited:
- EP-A- 0 301 509
- EP-A- 1 088 853
- DATABASE WPI Section Ch, Week 199136 Derwent Publications Ltd., London, GB; Class A14, AN 1991-263147 XP002287054 -& JP 03 172336 A (ADEKA ARGUS CHEM CO LTD) 25 July 1991 (1991-07-25)
- DATABASE WPI Section Ch, Week 199419 Derwent Publications Ltd., London, GB; Class A14, AN 1994-156778 XP002287055 -& JP 06 100749 A (ASAHI DENKA KOGYO KK) 12 April 1994 (1994-04-12)
- DATABASE WPI Section Ch, Week 198849 Derwent Publications Ltd., London, GB; Class A14, AN 1988-348424 XP002287056 -& JP 63 118374 A (KYOWA KAGAKU KOGYO KK) 23 May 1988 (1988-05-23)
- DATABASE WPI Section Ch, Week 200115 Derwent Publications Ltd., London, GB; Class A14, AN 2001-141294 XP002287057 -& JP 2000 290451 A (TODA KOGYO KK) 17 October 2000 (2000-10-17)

## Description

### BACKGROUND OF THE INVENTION:

The present invention relates to Mg-Zn-Al-based hydrotalcite-type particles and a resin composition containing the Mg-Zn-Al-based hydrotalcite-type particles. More particularly, the to present invention relates Mg-Zn-Al-based hydrotalcite-type particles having a large plate surface diameter and an appropriate thickness, whose refractive index can be variously adjusted, and a resin composition containing the Mg-Zn-Al-based hydrotalcite-type particles which can exhibit not only high resin stability and functional properties but also an excellent transparency as compared to those of transparent resin compositions using conventional hydrotalcite-type particles.

For the purpose for stabilizing and functionalizing resins, various compounds are added to the resins (resin compositions). For example, in order to enhance a heat stability of chlorine-containing resins, lead compounds or tin compounds are added thereto. However, in recent years, with intense consciousness of environmental protection, it has been strongly demanded to provide alternative compounds that can be replaced with these conventional compounds having a large burden on environment. For this reason, substantially harmless hydrotalcite-based compounds have been noticed. Also, in agricultural films, the hydrotalcite-based compounds are added to polyolefin-based resins because of a good far infrared absorption power thereof.

In general, as described in "Journal of Japan Chemical Society", 1995(8), pp. 622 to 628, the hydrotalcite-based compounds have a structure represented by the formula:

[M²⁺ ₁₋ₓM³⁺ ₓ(OH)₂]^{x+}[Aⁿ⁻ _{x/n}·H₂O]^{x-}

wherein M²⁺ represents a divalent metal ion such as Mg²⁺, Co²⁺, Ni²⁺ and Zn²⁺; M³⁺ represents a trivalent metal ion such as Al³⁺, Fe³⁺ and Cr³⁺; Aⁿ⁻ represents a n-valent cation such as OH⁻, Cl⁻, CO₃²⁻ and SO₄²⁻; and x is usually a number of 0.2 to 0.33.

Further, in the above literature, it is described that the hydrotalcite-based compounds have a laminated crystal structure including a two-dimensional basic layer, in which positively-charged octahedral brucite units are arranged, and a negatively-charged intermediate layer.

In S, Jiang, et al., "Acta Mineral. Sinica", 1984, p. 296 (1984), it has been reported that the hydrotalcite-based compounds in the form of particles have a refractive index of 1.523. The refractive index of the hydrotalcite-based compounds is close to those of various resins, and therefore, the hydrotalcite-based compounds are added to various resins to obtain substantially transparent resin compositions. Meanwhile, the refractive indices of the respective resins are different from each other, for example, 1.51 to 1.54 for polyethylenes, 1.52 to 1.55 for chlorine-containing resins, 1.59 to 1.60 for polystyrene resins, and 1.53 for nylons.

As to resin compositions requiring a transparency, there has been proposed, for example, a molded product composed of a particle-containing resin composition having a good transparency, which is obtained by mixing a vinyl chloride-based resin with a composite oxide containing silica having the substantially same refractive index as that of the vinyl chloride-based resin (Japanese Patent Publication (KOKOKU) No. 59-50251(1984)).

Also, it is known that a transparent resin composition is obtained by adding Zn-containing Mg-Al-based hydrotalcite particles to resins (Japanese Patent Application Laid-open (KOKAI) Nos. 63-118374(1988) and 64-36654(1989)).

Further, it is known that a film having a good transparency is obtained by adding hydrotalcite-based compounds into which Si as anion species is partially introduced, to polyolefin-based resins (Japanese Patent Application Laid-open (KOKAI) No. 2001-316530).

In addition, it is known to prevent halogen-containing resins from being deteriorated in transparency due to change in color tone thereof by adding heat-dehydrated hydrotalcite-based compounds thereto (Japanese Patent Application Laid-open (KOKAI) No. 6-316663(1994)).

Further, there have been proposed Mg-Al-based hydrotalcite particles in which Zn is uniformly contained (Japanese Patent Application Laid-open (KOKAI) No. 2000-290451), and a technique for producing Mg-Al-based hydrotalcite particles in two separate stages (Japanese Patent Application Laid-open (KOKAI) No. 2001-164042).

At present, it has been strongly required to provide Mg-Zn-Al-based hydrotalcite particles for addition to resins, which not only have a large plate surface diameter and an appropriate thickness, but also exhibit a broader refractive index than conventional ones without sacrificing heat stability and functional properties thereof. However, such Mg-Zn-Al-based hydrotalcite particles have not obtained conventionally.

Namely, in the technique described in Japanese Patent Publication (KOKOKU) No. 59-50251(1984), since the obtained particles may fail to satisfy the aimed properties owing to a narrow refractive index range thereof, it is not necessarily possible to obtain a molded product composed of a particle-containing resin composition having a good transparency.

In the techniques described in Japanese Patent Application Laid-open (KOKAI) Nos. 63-118374(1988) and 64-36654(1989), since it is necessary to uniformly disperse zinc in hydrotalcite particles, a large amount of zinc is required to control a refractive index thereof, so that it may be difficult to maintain high functional properties of resins.

In the technique described in Japanese Patent Application Laid-open (KOKAI) No. 2001-316530, since the refractive index of the hydrotalcite-type particles is in a range as narrow as 1.48 to 1.52, the hydrotalcite-type particles are applicable only to extremely limited resins.

In the technique described in Japanese Patent Application Laid-open (KOKAI) No. 6-316663(1994), a heat stability must be sacrificed for attaining a good transparency, thereby failing to provide fully satisfactory industrial advantages.

In the technique described in Japanese Patent Application Laid-open (KOKAI) No. 2000-290451, there are obtained zinc-containing hydrotalcite particles having a large plate surface diameter and an appropriate thickness. However, since zinc must be uniformly contained in the hydrotalcite particles, a large amount of zinc is required to control a refractive index thereof, so that it may be difficult to maintain high functional properties of resins.

In the technique described in Japanese Patent Application Laid-open (KOKAI) No. 2001-164042, although there are obtained hydrotalcite particles having a large plate surface diameter and an appropriate thickness, a refractive index thereof can be controlled by a heat-dehydration treatment only. Therefore, a heat stability, etc. of the hydrotalcite particles must be sacrificed for controlling the refractive index, so that is may be difficult to obtain resins having high functional properties. Thus, this technique is unsatisfactory from industrial viewpoints.

### SUMMARY OF THE INVENTION

An object of the present invention is to provide Mg-Zn-Al-based hydrotalcite-type particles not only exhibiting a broader refractive index applicable to various resins, which has never been achieved by conventional hydrotalcite particles as an additive for resin compositions requiring a transparency, but also having a large plate surface diameter and an appropriate thickness so as to allow the particles to be readily kneaded in resins.

Another object of the present invention is to provide a resin composition exhibiting not only a high resin stability and high functional properties, but also an excellent transparency.

To accomplish the aims, in a first aspect of the present invention, there are provided Mg-Zn-Al-based hydrotalcite-type particles comprising core particles composed of Mg-Al-based hydrotalcite, and an Mg-Zn-Al-based hydrotalcite layer formed on the surface of the core particle, and having an average plate surface diameter of 0.1 to 1.0 µm and a refractive index being adjustable to a required value in the range of 1.48 to 1.56.

In a second aspect of the present invention, there are provided Mg-Zn-Al-based hydrotalcite-type particles comprising core particles composed of Mg-Al-based hydrotalcite, and an Mg-Zn-Al-based hydrotalcite layer formed on the surface of the core particle, and having an average plate surface diameter of 0.1 to 1.0 µm, wherein a molar ratio of zinc to a sum of magnesium and zinc contained in the Mg-Zn-Al-based hydrotalcite-type particles is in the range of 0.003 to 0.6, and a refractive index of the Mg-Zn-Al-based hydrotalcite-type particles is adjustable to a required value in the range of 1.48 to 1.56.

In a third aspect of the present invention, there is provided a resin composition comprising the above Mg-Zn-Al-based hydrotalcite-type particles and a binder resin.

### DETAILED DESCRIPTION OF THE INVENTION

First, the Mg-Zn-Al-based hydrotalcite-type particles of the present invention are described.

The Mg-Zn-Al-based hydrotalcite-type particles of the present invention have an average plate surface diameter of usually 0.1 to 1.0 µm, preferably 0.15 to 0.8 µm. When the average plate surface diameter of the Mg-Zn-Al-based hydrotalcite-type particles is less than 0.1 µm, the Mg-Zn-Al-based hydrotalcite-type particles tend to exhibit an insufficient dispersibility in resins upon kneaded therewith. When the average plate surface diameter of the Mg-Zn-Al-based hydrotalcite-type particles is more than 1.0 µm, it may be difficult to industrially produce Mg-Zn-Al-based hydrotalcite-type particles suitable for addition to resins. Meanwhile, the average plate surface diameter used herein means an average value of diameters of primary particles of the Mg-Zn-Al-based hydrotalcite-type particles as measured by the below-mentioned method.

The Mg-Zn-Al-based hydrotalcite-type particles of the present invention have a BET specific surface area value of usually 5 to 60 m²/g, preferably 7 to 30 m²/g in the case of heat-untreated particles, and usually 7 to 100 m²/g, preferably 10 to 80 m²/g in the case of heat-treated particles.

The Mg-Zn-Al-based hydrotalcite-type particles of the present invention have a composition represented by the following formula:

(Mg_{1-y}Zn_{y})₁₋ₓ·Al ₓ·(OH)₂·Anⁿ⁻ ₚ·mH₂O

wherein x is a number of 0.2 to 0.5 (0.2≤x≤0.5); y is a number of 0.003 to 0.6 (0.003≤y≤0.6); m is a number of from more than 0 to 2 (0<m≤2); p is a number as a ratio of x to n (p=x/n); and Anⁿ⁻ is a n-valent anion.

The m value representing a water content in the Mg-Zn-Al-based hydrotalcite-type particles is in the range of usually 0.8 to 2.0, preferably 1.0 to 1.7 in the case of heat-untreated particles, and usually from more than 0 to 1.0, preferably 0.3 to 0.8 in the case of heat-treated particles.

The x value representing an A1 content in the Mg-Zn-Al-based hydrotalcite-type particles is in the range of usually 0.2 to 0.5, preferably 0.2 to 0.4. When the x value is less than 0.2, or more than 0.5, it may be difficult to obtain single phase Mg-Zn-Al-based hydrotalcite-type particles. The y value representing a Zn content in the Mg-Zn-Al-based hydrotalcite-type particles is in the range of usually 0.003 to 0.6, preferably 0.003 to 0.4. When the y value is less than 0.003, it may be difficult to obtain Mg-Zn-Al-based hydrotalcite-type particles maintaining high functional properties in resins and having a broad refractive index. When the y value is more than 0.6, the Mg-Zn-Al-based hydrotalcite-type particles tend to be deteriorated in functional properties in resins upon kneading therewith.

Also, the amount of zinc contained in the Mg-Zn-Al-based hydrotalcite-type particles of the present invention is usually 1 to 30% by weight, preferably 1.5 to 25% by weight based on the weight of the whole particles. When the zinc content is less than 1% by weight, it may be difficult to obtain Mg-Zn-Al-based hydrotalcite-type particles maintaining high functional properties in resins and having a broad refractive index. When the zinc content is more than 30% by weight, the Mg-Zn-Al-based hydrotalcite-type particles tend to be deteriorated in functional properties in resins upon kneading therewith.

The kinds of anions (Anⁿ⁻) contained in the Mg-Zn-Al-based hydrotalcite-type particles are not particularly restricted. Examples of the anions (Anⁿ⁻) may include hydroxyl ion, carbonate ion, sulfate ion, phosphate ion, silicate ion, organic carboxylate ion, organic sulfonate ion, organic phosphate ion or the like.

The Mg-Zn-Al-based hydrotalcite-type particles of the present invention have a pH value of usually 8.5 to 10.5, preferably 8.5 to 10.0. When the pH value of the Mg-Zn-Al-based hydrotalcite-type particles is more than 10.5, it may be difficult to prevent elution of magnesium therefrom. As a result, when the particles are added to resins, the obtained resin composition tends to be undesirably discolored.

The refractive index required for the Mg-Zn-Al-based hydrotalcite-type particles of the present invention is in the range of 1.48 to 1.70. There exist almost no applications of resins requiring such a transparency that a refractive index thereof is less than 1.48. On the other hand, it may be extremely difficult to both chemically and industrially produce hydrotalcite having a refractive index of more than 1.70.

The Mg-Zn-Al-based hydrotalcite-type particles (Mg-Zn-Al-based particles having a hydrotalcite construction) of the present invention can be obtained by growing an Mg-Zn-Al-based hydrotalcite layer (outer shell) on the surface of the respective Mg-Al-based hydrotalcite core particles. The refractive index of the Mg-Zn-Al-based hydrotalcite-type particles can be controlled to the required value in the range of 1.48 to 1.56 by varying the Zn content in the hydrotalcite layer as an outer shell.

In addition, by removing a part of water contained in the hydrotalcite by means of dehydration, the refractive index of the Mg-Zn-Al-based hydrotalcite-type particles can be further controlled over a broader range than that obtained by varying the Zn content, namely, to the required value in the range of 1.48 to 1.70. Thus, since the refractive index of the particles contained in resins can be controlled so as to match with a refractive index and functions of the aimed resins, it becomes possible to produce a resin composition not only maintaining high functional properties of the resins but also exhibiting an extremely high transparency.

The heat-treated Mg-Zn-Al-based hydrotalcite-type particles of the present invention can provide higher resin stability and functional properties as compared to heat-treated zinc-free Mg-Al-based hydrotalcite particles and heat-treated Mg-Zn-Al-based hydrotalcite particles in which zinc is uniformly contained. This is due to the change in refractive index caused by adding zinc to the outer shell portion of the Mg-Zn-Al-based hydrotalcite particles. The heat-treated Mg-Zn-Al-based hydrotalcite-type particles having a refractive index of 1.48 to 1.70 can be produced by removing therefrom, a smaller amount of water than those from the heat-treated zinc-free Mg-Al-based hydrotalcite particles and heat-treated Mg-Zn-Al-based hydrotalcite particles in which zinc is uniformly contained. Therefore, it becomes possible to not only impart a high stability and high functional properties to resins, but also obtain a resin composition having a high transparency. Further, since zinc is present in the outer shell (outer layer) of the hydrotalcite-type particles, the amount of magnesium eluted to resins can be reduced, thereby preventing discoloration of the resins upon processing.

The Mg-Zn-Al-based hydrotalcite-type particles of the present invention may be coated, if required, with at least one surface-treating agent selected from the group consisting of higher fatty acids, anionic surfactants, higher fatty acid/phosphoric acid esters, coupling agents and polyhydric alcohol esters. By coating the surface of the respective Mg-Zn-Al-based hydrotalcite-type particles with such a surface-coating material, the Mg-Zn-Al-based hydrotalcite-type particles can be enhanced in dispersibility in resins, and can provide resins having higher functional properties and stability.

Examples of the higher fatty acids may include lauric acid, stearic acid, palmitic acid, oleic acid, linoleic acid or the like. Examples of the higher fatty acid/phosphoric acid ethers may include stearylether phosphoric acid, oleylether phosphoric acid, laurylether phosphoric acid or the like. Examples of the polyhydric alcohol esters may include sorbitan monooleate, sorbitan monolaurate, stearic monoglyceride or the like.

Examples of the anionic surfactants may include salts such as sodium laurylsulfate, sodium dodecylbenzenesulfonate, sodium stearate, potassium oleate and potassium castor oil, or the like.

Examples of the coupling agents may include silane-based coupling agents, aluminum-based coupling agents, titanium-based coupling agents, zirconium-based coupling agents or the like.

The amount of the surface-treating agent coated is usually 0.2 to 20.0% by weight, preferably 0.5 to 18.0% by weight (calculated as C) based on the weight of the hydrotalcite-type particles. When the amount of the surface-treating agent coated is less than 0.2% by weight, the effects of enhancing the functional properties and dispersibility by the coating tend to be unrecognizable. When the amount of the surface-treating agent coated is more than 20.0% by weight, since the effects by the coating are already saturated, the use of such a large amount of the surface-treating agent is not required.

The surface-coated Mg-Zn-Al-based hydrotalcite-type particles of the present invention have a pH value of usually 7.0 to 9.5, preferably 7.0 to 9.0 which is lower than that of the surface-uncoated Mg-Zn-Al-based hydrotalcite-type particles of the present invention.

Next, the process for producing the Mg-Zn-Al-based hydrotalcite-type particles according to the present invention is described.

The Mg-Zn-Al-based hydrotalcite-type particles of the present invention can be produced by mixing an anion-containing aqueous alkali solution, an aqueous magnesium salt solution and an aqueous aluminum salt solution with each other; adjusting a pH value of the mixed solution to 10 to 14; aging the resultant mixed solution at a temperature of 80 to 105°C to produce Mg-Al-based hydrotalcite particles as core particles (primary reaction); then adding an aqueous magnesium salt solution, an aqueous zinc salt solution and an aqueous aluminum salt solution which contain magnesium, zinc and aluminum in a total amount of not more than 0.35 mole per one mole of a total amount of magnesium and aluminum added upon production of the core particles, to a water suspension containing the core particles; and aging the resultant suspension at a pH value of 8 to 11 and a temperature of 60 to 105°C (secondary reaction).

As the anion-containing aqueous alkali solution, there may be used a mixed aqueous alkali solution composed of an anion-containing aqueous solution and an aqueous alkali hydroxide solution.

Examples of the anion-containing aqueous solution may include aqueous solutions of sodium carbonate, potassium carbonate, sodium phosphate, sodium silicate, sodium sulfate, organic carboxylic acid salts, organic sulfonic acid salts, organic phosphoric acid salts or the like.

Examples of the aqueous alkali hydroxide solution may include aqueous solutions of sodium hydroxide, potassium hydroxide, ammonia, urea or the like.

Examples of the aqueous magnesium salt solutions usable in the present invention may include an aqueous magnesium sulfate solution, an aqueous magnesium chloride solution, an aqueous magnesium nitrate solution or the like. Of these solutions, preferred are an aqueous magnesium sulfate solution and an aqueous magnesium chloride solution. Further, there may also be used slurries of magnesium oxide particles or magnesium hydroxide particles.

Examples of the aqueous aluminum salt solutions usable in the present invention may include an aqueous aluminum sulfate solution, an aqueous aluminum chloride solution, an aqueous aluminum nitrate solution or the like. Of these solutions, preferred are an aqueous aluminum sulfate solution and an aqueous aluminum chloride solution. Further, there may also be used slurries of aluminum oxide particles or aluminum hydroxide particles.

In the primary reaction, the mixing order of the anion-containing aqueous alkali solution, aqueous magnesium salt solution and aqueous aluminum salt solution is not particularly restricted. For example, the respective aqueous solutions or slurries may be mixed together at the same time. Preferably, a mixed solution or slurry previously prepared by mixing the aqueous magnesium salt solution and aqueous aluminum salt solution with each other, is added to the anion-containing aqueous alkali solution.

The respective aqueous solutions may be added at one time or may be continuously dropped.

The primary reaction solution obtained by mixing and reacting the anion-containing aqueous alkali solution, aqueous magnesium salt solution and aqueous aluminum salt solution with each other has a magnesium concentration of usually 0.1 to 1.5 mol/liter, preferably 0.1 to 1.2 mol/liter; an aluminum concentration of usually 0.03 to 1.0 mol/liter, preferably 0.04 to 0.8 mol/liter; an anion concentration of usually 0.05 to 1.4 mol/liter, preferably 0.06 to 1.2 mol/liter; and an alkali concentration of usually 0.5 to 8 mol/liter, preferably 0.8 to 6 mol/liter. The ratio of magnesium to aluminum added (Mg/Al) is usually 0.8 to 5.0, preferably 0.9 to 4.5.

The aging temperature used in the primary reaction is usually 80 to 105°C, preferably 85 to 105°C. Even though the aging temperature is less than 80°C, the hydrotalcite-type particles are produced, but it may be difficult to obtain hydrotalcite-type particles having a large plate surface diameter. When the aging temperature is more than 105°C, the use of a pressure container such as autoclave tends to be uneconomically required.

The pH value of the reaction solution aged in the primary reaction is usually 10 to 14, preferably 11 to 14. When the pH value is less than 10, it may be difficult to obtain hydrotalcite-type particles having a large plate surface diameter and an appropriate thickness.

The aging time used in the primary reaction is usually 2 to 24 hours. When the aging time is less than 2 hours, it may be difficult to obtain hydrotalcite-type particles having a large plate surface diameter and an appropriate thickness. On the other hand, the aging time of more than 24 hours tends to be uneconomical.

Upon completion of the primary reaction, no residual magnesium and aluminum are present in the reaction suspension, and all thereof contribute to formation of the hydrotalcite-type particles. Therefore, it is considered that the composition of the core particles is substantially the same as that of the raw materials charged.

The hydrotalcite core particles obtained in the primary reaction have a plate surface diameter of usually 0.1 to 0.9 µm, a thickness of usually 0.01 to 0.07 µm, and a BET specific surface area value of usually 5 to 80 m²/g.

The molar ratio of a sum of magnesium, zinc and aluminum added in the secondary reaction to a sum of magnesium and aluminum added in the primary reaction is usually not more than 0.35, preferably not more than 0.33. When the molar ratio is more than 0.35, the zinc content is too large, so that it may be difficult to obtain hydrotalcite-type particles maintaining high functional properties in resins and having a broad refractive index. In particular, in case where the molar ratio is more than 0.5, the growth reaction may be inhibited, and a large amount of fine particles are precipitated outside of the core particles, resulting in very poor dispersibility of the particles in resins.

In the secondary reaction, the mixing order of the aqueous magnesium salt solution, aqueous zinc salt solution and aqueous aluminum salt solution is not particularly restricted. For example, the respective aqueous solutions or slurries may be mixed together at the same time. Preferably, the aqueous magnesium salt solution, aqueous zinc salt solution and aqueous aluminum salt solution is added in the form of a mixed solution or slurry previously prepared by mixing these solutions with each other.

The respective aqueous solutions may be added at one time or may be continuously dropped.

The total metal concentration of magnesium, zinc and aluminum contained in the mixed solution used in the secondary reaction is usually 0.1 to 1.5 mol/liter, preferably 0.1 to 1.2 mol/liter. When the total metal concentration in the mixed solution is less than 0.1 mol/liter, it may be difficult to obtain a transparent resin composition having good stability and functional properties. When the total metal concentration in the mixed solution is more than 1.5 mol/liter, uniform growth reaction tends to be inhibited, so that fine particles are present outside of the core particles, resulting in poor dispersibility in resins when added to or kneaded with the resins.

The aging temperature used in the secondary reaction is usually 60 to 105°C, preferably 65 to 105°C. Even though the aging temperature is less than 60°C, the hydrotalcite-type particles are produced, but it may be difficult to obtain hydrotalcite-type particles having a large plate surface diameter. When the aging temperature is more than 105°C, the use of a pressure container such as autoclave tends to be uneconomically required.

The pH value of the reaction solution aged in the secondary reaction is usually 8 to 11, preferably 8 to 10. When the pH value is less than 8, it may be difficult to obtain hydrotalcite-type particles having a large plate surface diameter and an appropriate thickness. When the pH value is more than 11, a part of zinc added still remains in the aqueous solution without precipitation or crystallization, resulting in economically and industrially disadvantageous process.

The aging time used in the secondary reaction is usually 2 to 24 hours. When the aging time is less than 2 hours, it may be difficult to obtain hydrotalcite-type particles having a large plate surface diameter and an appropriate thickness. On the other hand, the aging time of more than 24 hours tends to be uneconomical.

Upon completion of the secondary reaction, no residual magnesium, zinc and aluminum are present in the reaction suspension, and all thereof contribute to formation of the hydrotalcite-type particles. Therefore, it is considered that the composition of the hydrotalcite layer formed on the surface of the respective core particles is substantially the same as that of the raw materials charged in the growth reaction.

Meanwhile after completion of the secondary reaction, the obtained particles may also be used as core particles for further growth reactions.

After completion of the reaction, the resultant particles are further subjected to filtration, water-washing and drying by ordinary methods, thereby obtaining Mg-Zn-Al-based hydrotalcite-type particles composed of zinc-free Mg-Al-based hydrotalcite core particles, and an Mg-Zn-Al-based hydrotalcite layer (outer shell) formed on the surface of the core particle.

The heat-treated Mg-Zn-Al-based hydrotalcite-type particles can be produced by heat-treating the above-prepared Mg-Zn-Al-based hydrotalcite-type particles at a temperature of usually 80 to 350°C, preferably 85 to 300°C, more preferably 90 to 250°C. The heat-treating time may be controlled depending upon the heat-treating temperature. Also, the heat-treating atmosphere may be either oxidative atmosphere or non-oxidative atmosphere. It is preferred that the use of gases exhibiting a strong reducing effect such as hydrogen gas is avoided.

The coating of the surface of the respective Mg-Zn-Al-based hydrotalcite-type particles with the surface-treating agent may be conducted by either dry surface treatment or wet surface treatment. In the dry surface treatment, the Mg-Zn-Al-based hydrotalcite-type particles and the surface-treating agent are added into Henschel mixer, sand mill, edge runner, Taninaka-type pulverizer, attritor, etc., and dry-mixed and pulverized to form a surface-treating agent layer on the surface (outer shell) thereof.

In the wet surface treatment, a water suspension obtained by dispersing the Mg-Zn-Al-based hydrotalcite-type particles in water is mixed with an aqueous solution of higher fatty acid salts, etc.; after controlling the temperature to usually 20 to 95°C, the resultant solution is mixed and stirred, followed by controlling the pH value thereof, if required, to coat the surface of the respective Mg-Zn-Al-based hydrotalcite-type particles with the surface-treating agent; and further the coated particles are subjected to filtration, water-washing, drying and pulverization to form a surface-treating agent layer on the surface (outer shell) thereof. When the heat treatment is continuously conducted, there may be selected an optional surface-treating agent that is free from decomposition at the heat-treating temperature.

When the surface-treating agent is decomposed at the heat-treating temperature as required, the heat-treated particles may be further subjected to dry surface treatment using Henschel mixer. In the dry surface treatment, the Mg-Zn-Al-based hydrotalcite-type particles and the surface-treating agent are pulverized and mixed with each other, and further heated by an external heating source, if required.

As the surface-treating agent, there may be used the above-mentioned materials, i.e., higher fatty acids, higher fatty acid/phosphoric acid esters, polyhydric alcohol esters, anionic surfactants, coupling agents or the like.

The amount of the surface-treating agent coated is usually 0.2 to 20.0% by weight (calculated as C) based on the weight of the Mg-Zn-Al-based hydrotalcite-type particles. When the amount of the surface-treating agent coated is less than 0.2% by weight, it may be difficult to coat the surface of the respective particles with a sufficient amount of the surface-treating agent such as higher fatty acids. When the amount of the surface-treating agent coated is more than 20.0% by weight, since the effects by the coating are already saturated, the use of such a large amount of the surface-treating agent is not required.

Next, the resin composition of the present invention is described.

The resin composition of the present invention contains the above Mg-Zn-Al-based hydrotalcite-type particles and exhibits an extremely excellent transparency. Examples of the resin used in the resin composition may include chlorine-containing resins, polyethylene resins, ethylene-vinyl acetate copolymers, polypropylene resins, PET resins, nylon resins, phenol resins, etc.

The amount of the Mg-Zn-Al-based hydrotalcite-type particles contained in the resin composition of the present invention is usually 0.5 to 10 parts by weight based on 100 parts by weight of the resin. When the amount of the Mg-Zn-Al-based hydrotalcite-type particles contained is less than 0.5 part by weight, the resultant resin composition tends to be deteriorated in stability. When the amount of the Mg-Zn-Al-based hydrotalcite-type particles contained is more than 10 parts by weight, since the effects by addition of the Mg-Zn-Al-based hydrotalcite-type particles are already saturated, such a large amount of the particles is not required. Further, when the Mg-Zn-Al-based hydrotalcite-type particles are used in a too large amount, the resin composition tends to be foamed, resulting in adverse influences such as poor appearance and early discoloration.

The resin composition may further contains plasticizers as well as other stabilizers or additives.

Examples of the plasticizers may include trimellitic acid ester-based plasticizers such as trioctyl trimellitate (TOTM) and tri-n-octyl-n-decyl trimellitate, phthalic acid ester-based plasticizers such as diisodecyl phthalate (DIDP), diisononyl phthalate (DINP) and di-2-ethylhexy phthalate (DOP), polyester-based plasticizers such as polypropylene adipate and polypropylene sebacate, or the like.

Examples of the other stabilizers may include zinc compounds such as zinc stearate, zinc laurate and zinc linoleate, β-diketones such as dibenzoyl methane, stearoylbenzoyl methane and dehydroacetic acid, phosphites such as alkylallyl phosphites and trialkyl phosphites, polyhydric alcohol-based compounds such as dipentaerythritol, pentaerythritol, glycerin, diglycerin and trimethylol propane, higher fatty acids such as stearic acid, lauric acid and and oleic acid, epoxy-based compounds such as epoxidated linseed oil and epoxidated soybean oil, or the like.

Examples of the other additives may include antioxidants such as phenol-based compounds, amine-based compounds and phosphoric acid-based compounds, compounds obtained by replacing terminal groups of polyesters with OH groups, gelation accelerators such as acrylonitrile-styrene copolymers and methyl methacrylate-styrene copolymers, extenders such as calcium carbonate, silica, glass beads, mica and glass fibers, flame retardants, e.g., inorganic flame retardants such as antimony trioxide, aluminum hydroxide and zinc borate, bromine-containing organic flame retardants and halogen-containing phosphoric acid ester-based flame retardants, lubricants such as stearic acid, polyethylene waxes, calcium stearate, magnesium stearate and barium stearate, mildew-proofing agents such as Trichlosan, Orthoside, Sanaizole 100 and Sanaizole 300, or the like.

Next, the process for producing the resin composition according to the present invention is described.

The resin composition of the present invention can be produced by an ordinary method. For example, the resin composition in the form of a kneaded sheet can be obtained by mixing the resin and the Mg-Zn-Al-based hydrotalcite-type particles as well as various stabilizers and additives mentioned above with each other at a desired mixing ratio, kneading the resultant mixture by hot rolls to obtain a kneaded sheet, and then pressing the kneaded sheet using a hot press. The kneading temperature of the hot rolls may vary depending upon resins or resin compositions used, and is usually 140 to 300°C, and the pressing temperature of the hot press is usually 145 to 320°C.

In the present invention, by conducting the primary reaction in which the hydrotalcite core particles are produced by co-precipitation reaction, and the secondary reaction in which the water suspension containing the core particles is mixed with the aqueous magnesium salt solution, aqueous zinc salt solution and aqueous aluminum salt solution, and then aged, it is possible to obtain Mg-Zn-Al-based hydrotalcite-type particles having a large plate surface diameter and an appropriate thickness which are well-controlled in refractive index and reduced in basicity, under an ordinary pressure.

Hitherto, as to the hydrotalcite-type particles added to transparent resin compositions, non-uniformity of composition of metal elements in the hydrotalcite-type particles as well as water content therein have not been noticed for improving a transparency of resins kneaded therewith. For example, in Japanese Patent Application Laid-open (KOKAI) No. 6-316663(1994), it is described that the hydrotalcite-type particles in which metal elements are uniformly contained are heat-dehydrated to inhibit a halogen-containing resin from suffering from discoloration. However, in this KOKAI, although the method of inhibiting the discoloration of resins is proposed, the change in refractive index due to non-uniformity of composition of metal elements in hydrotalcite as well as water content therein has not been noticed at all.

As a result of the present inventors' earnest studies, a new mechanism of reaction between the resin and hydrotalcite-type particles in the resin composition has been successfully found. For example, in the case of chlorine-containing resin compositions containing no plasticizers, chlorine ions and/or molecules generated due to heat degradation of the resins are introduced between layers of hydrotalcite through water that is also desorbed therefrom due to heating, and then fixed therein, thereby preventing further continuous degradation of resins due to the chlorine ions and/or molecules. In this case, if an appropriate amount of water is produced, there is caused no undesirable discoloration of resins. However, if a too large amount of water is desorbed from the hydrotalcite-type particles by application of external heat upon kneading with resins, etc., magnesium contained in the particles is readily eluted out and contacted with the resins to form a magnesium complex as generally known, thereby causing problems such as reddish-discolored resins.

More specifically, the larger the amount of water previously removed from between the layers of the hydrotalcite-type particles by dehydration treatment, the more effectively the discoloration of resins can be prevented upon subsequently kneading with resins. On the other hand, when the distance between the layers of the hydrotalcite-type particles is reduced due to the removal of water therefrom by dehydration treatment, the refractive index of the hydrotalcite-type particles is increased. For this reason, when the amount of water removed from between the layers of the hydrotalcite-type particles reaches a certain level, the particles show the substantially same refractive index as that of the chlorine-containing resin composition, so that the resultant resin composition can be improved in transparency. However, as described above, the heat stability of the chlorine-containing resin composition is considerably influenced by the amount of water present between the layers of the hydrotalcite-type particles. Namely, although the use of the dehydrated hydrotalcite is effective to improve the transparency of the resin composition and prevent undesirable discoloration thereof, the resultant resin composition tends to be considerably deteriorated in heat stability. Accordingly, it is required to allow an appropriate amount of water to remain between the layers of the hydrotalcite, in order to attain a good heat stability of resins.

According to the present invention, by incorporating zinc into the hydrotalcite-type particles, the refractive index of the particles can be well controlled while keeping water between the layers thereof. Further, if required, by removing a part of water from between the layers of the particles, it is possible to obtain Mg-Zn-Al-based hydrotalcite-type particles exhibiting a still higher refractive index.

Also, since zinc is present only in the surface layer of the Mg-Zn-Al-based hydrotalcite-type particles, the pH value of the particles can be controlled near to neutral, so that the amount of magnesium eluted out therefrom can be reduced, and undesirable discoloration of resins upon processing can also be prevented.

Thus, the Mg-Zn-Al-based hydrotalcite-type particles of the present invention can exhibit a refractive index that is adjustable to that required for resins used therewith, and reduced in basicity, and are, therefore, suitable as a stabilizer for high transparent resin compositions.

Further, the resin composition of the present invention contains the above Mg-Zn-Al-based hydrotalcite-type particles and, therefore, is suitably used as an excellent transparent resin composition.

### EXAMPLES

The present invention is described in more detail by Examples and Comparative Examples, but the Examples are only illustrative and, therefore, not intended to limit the scope of the present invention.

Various properties were evaluated by the following methods.
(1) The plate surface diameter of the hydrotalcite-type particles was expressed by an average value of diameters measured from a micrograph.
(2) The thickness of the hydrotalcite-type particles was expressed by the value calculated from a diffraction peak curve of (006) crystal plane of the hydrotalcite-type particles according to the Scherrer's formula using a X-ray diffractometer "RINT 2500" (manufactured by Rigaku Denki Co., Ltd.; tube: Cu; tube voltage: 40 kV; tube current: 300 mA; goniometer: wide-angle goniometer; sampling width: 0.020°; scanning speed: 2°/min; emitting slit: 1°; scattering slit: 1°; light-receiving slit: 0.50 mm).
(3) The identification of the hydrotalcite-type particles was conducted by X-ray diffraction measurement using the same X-ray diffractometer as used in the above (2) at a diffraction angle 2θ of 3 to 80°.
(4) The indices x and y in the composition formula of the Mg-Zn-Al-based hydrotalcite-type particles which is represented by:

   (Mg_{1-y}Zn_{y})₁₋ₓ·Alₓ·(OH)₂·Anⁿ⁻ ₚ·mH₂O,

   were determined by dissolving the particles in an acid, and analyzing the obtained solution using a plasma emission spectroscopic device "SPS-4000 Model" (manufactured by Seiko Denshi Kogyo Co., Ltd.).
(5) The specific surface area was measured by a BET method using nitrogen.
(6) The pH value of the particles was measured as follows. That is, 5 g of a sample was weighed and charged into a 300 ml conical flask, and 100 ml of boiled pure water was added thereto. The obtained mixture was heated and held in a boiled state for about 5 minutes. Then, after the flask was plugged, the mixture was allowed to stand for cooling to ordinary temperature. After adding water in an amount corresponding to reduction in weight of the mixture, the flask was plugged again and shaken for one minute. Then, after the resultant mixture was allowed to stand for 5 minutes, a supernatant liquid was separated therefrom to measure a pH value thereof according to JIS Z 8802-7. The thus measured pH value was regarded as the pH value of the particles.
(7) The carbonate ion content in the case of using carbonate ion (CO₃²⁻) as anion (Anⁿ⁻) as well as the amount of a coating layer composed of higher fatty acids, higher fatty acid/phosphoric acid esters, polyhydric alcohol esters, anionic surfactants, coupling agents, etc., formed on the surface of the particle, were respectively determined by measuring the carbon contents (% by weight) using "Carbon and Sulfur Analyzer EMIA-2200" (manufactured by Horiba Seisakusho Co., Ltd.). Meanwhile, the amount of a coating layer composed of higher fatty acids, higher fatty acid/phosphoric acid esters, polyhydric alcohol esters, anionic surfactants, coupling agents, etc., formed on the surface of the particle, was evaluated from an increment of the carbon content between before and after the surface treatment.
(8) The refractive index of the Mg-Zn-Al-based hydrotalcite-type particles was measured by the following method according to JIS K0062. That is, the particles were dispersed in a solvent composed of α-bromonaphthalene and DMF, and the refractive index of the dispersion was measured at 23°C by Becke method using an Abbe refractometer "3T" (manufactured by Atago Co., Ltd.).
(9) The existing position of zinc in the Mg-Zn-Al-based hydrotalcite-type particles was determined by the following method.
   That is, 10 g of the Mg-Zn-Al-based hydrotalcite-type particles were added to a mixed solution of 33 ml of 0.1 mol/liter hydrochloric acid and 100 ml of ion-exchanged water, and dissolved therein at 20°C for 10 minutes. Further, after 0.1 mol/liter hydrochloric acid was added again to the obtained solution to adjust the pH value thereof to 4, the resultant solution was rapidly filtered, and the obtained solid was dried to obtain Mg-Zn-Al-based hydrotalcite-type particles partially dissolved. The obtained particles were dissolved in an acid, and a zinc content in the residual Mg-Zn-Al-based hydrotalcite-type particles that still remained undissolved was measured by X-ray fluorescent analysis method.
(10) The transparency of the resin kneaded material was determined by measuring the haze of a resin-kneaded film using a spectrophotometer "JASCO V-560" (manufactured by Nippon Bunko Co., Ltd.) according to JIS K 7105. The lower the haze value, the more excellent the transparency of the film.

### Example 1:

### <Production of Mg-Zn-Al-based hydrotalcite-type particles>

A mixture containing 500 ml of an aqueous sodium carbonate solution having a CO₃²⁻ ion concentration of 0.84 mol/liter, 341 ml of a 18.4 mol/liter sodium hydroxide aqueous solution having a pH value of 14.2, and 500 ml of water, was mixed and stirred in a reactor while keeping the temperature at 60°C. Then, a mixed solution of 750 ml of a 1.92 mol/liter magnesium sulfate aqueous solution and 250 ml of a 0.96 mol/liter aluminum sulfate aqueous solution was added to the resultant mixture to adjust a total volume thereof to 2.5 liters. The thus obtained mixed solution was aged under stirring at a pH value of 12.8 and a temperature of 90°C for 12 hours, thereby obtaining a white precipitate. It was confirmed that the obtained hydrotalcite core particles had a plate surface diameter of 0.20 µm, a thickness of 0.04 µm and a specific surface area value of 18.6 m²/g (primary reaction).

Thereafter, a mixed solution of 250 ml of a 1.35 mol/liter magnesium sulfate aqueous solution, 150 ml of a 0.47 mol/liter aluminum sulfate aqueous solution and 100 ml of a 0.519 mol/liter zinc sulfate aqueous solution, was added to the reactor to adjust the total volume to 3 liters. The thus obtained mixed solution was aged under stirring at a pH value of 9.7 and a temperature of 95°C for 6 hours, thereby obtaining a white precipitate (secondary reaction).

The molar ratio of a sum of magnesium, zinc and aluminum added in the secondary reaction to a sum of magnesium and aluminum added in the primary reaction was 0.2. Further the obtained white precipitate was filtered out, washed with water and then dried at 60°C, thereby obtaining white particles. As a result of analyzing the white particles, it was confirmed that the obtained particles were hydrotalcite-type particles.

Further, it was confirmed that the obtained Mg-Zn-Al-based hydrotalcite-type particles had an average plate surface diameter of 0.25 µm, a thickness of 0.057 µm and a BET specific surface area of 15.3 m²/g.

In order to determine the existing position of zinc in the Mg-Zn-Al-based hydrotalcite-type particles, the hydrotalcite-type particles were subjected to dissolution treatment. As a result, it was confirmed that at the time at which a 69.9 wt. % portion of the respective particles still remained undissolved, no zinc was detected from the residual portion of each particle. Accordingly, it was recognized that zinc was present only in the surface layer portion of the respective particles.

### Example 2:

### <Production of heat-treated Mg-Zn-Al-based hydrotalcite-type particles>

The Mg-Zn-Al-based hydrotalcite-type particles obtained in Example 1 were heat-dehydrated at 250°C for one hour, thereby obtaining heat-treated Mg-Zn-Al-based hydrotalcite-type particles.

The essential production conditions and various properties of the obtained heat-treated Mg-Zn-Al-based hydrotalcite-type particles are shown in Table 4. Meanwhile, the composition of the heat-treated particles was the substantially same as that of the untreated particles before the heat treatment.

### <Kneading with resins>

Then, the Mg-Zn-Al-based hydrotalcite-type particles obtained in Example 1 were kneaded in a resin 1 under conditions including composition, roll temperature and time as shown in Table 5, thereby obtaining a resin kneaded material.

### <Production of resin-kneaded film>

The thus obtained resin kneaded material was press-molded under conditions including pressing temperature, heating pressure and time, and cooling pressure as shown in Table 5, thereby obtaining a resin film.

As shown in Table 6, it was confirmed that the obtained hard vinyl chloride resin film had a haze value of 5.3 which was the substantially same as the haze value (5.1) of the resin containing no hydrotalcite and, therefore, exhibited an excellent transparency. Further, it was confirmed that the resin film was free from discoloration.

### <Production of Mg-Zn-Al-based hydrotalcite-type particles>

### Examples 3 to 5 and Comparative Examples 1 to 4:

The same procedure as defined in Example 1 was conducted except that kinds and concentrations of magnesium compounds, kinds and concentrations of aluminum compounds, concentrations of sodium carbonate salts, concentrations of aqueous alkali solutions, and aging temperatures, were changed variously, thereby obtaining Mg-Zn-Al-based hydrotalcite-type particles.

The essential production conditions are shown in Tables 1 and 2, and various properties of the thus obtained Mg-Zn-Al-based hydrotalcite-type particles are shown in Table 3. Meanwhile, in Comparative Example 4, only the primary reaction was conducted.

As a result of subjecting the Mg-Zn-Al-based hydrotalcite-type particles obtained in Examples 3 to 5 to dissolution treatment, it was confirmed that zinc was present only in the surface layer portion of the respective particles.

### <Production of heat-treated Mg-Zn-Al-based hydrotalcite-type particles>

### Examples 6 to 14 and Comparative Examples 5 to 8:

The Mg-Zn-Al-based hydrotalcite-type particles were heat-dehydrated while variously changing kinds of the particles and heat-dehydration conditions, thereby obtaining heat-treated Mg-Zn-Al-based hydrotalcite-type particles.

The essential production conditions and various properties of the thus obtained heat-treated Mg-Zn-Al-based hydrotalcite-type particles are shown in Table 4. Meanwhile, the composition of the heat-treated particles was the substantially same as that of the heat-untreated particles before the heat treatment.

### <Kneading with resins>

Then, the obtained heat-treated Mg-Zn-Al-based hydrotalcite-type particles were kneaded with resins under conditions including composition, roll temperature and time as shown in Table 5, thereby obtaining a resin kneaded material.

### <Production of resin-kneaded film>

The thus obtained resin kneaded material was press-molded under conditions including pressing temperature, heating pressure and time, and cooling pressure as shown in Table 5, thereby obtaining a resin film.

The essential production conditions of the resin compositions and resin films are shown in Table 5, and various properties of the thus obtained resin films are shown in Table 6. As a result, it was confirmed that all of the resin films obtained in Examples 6 to 14 were free from discoloration.

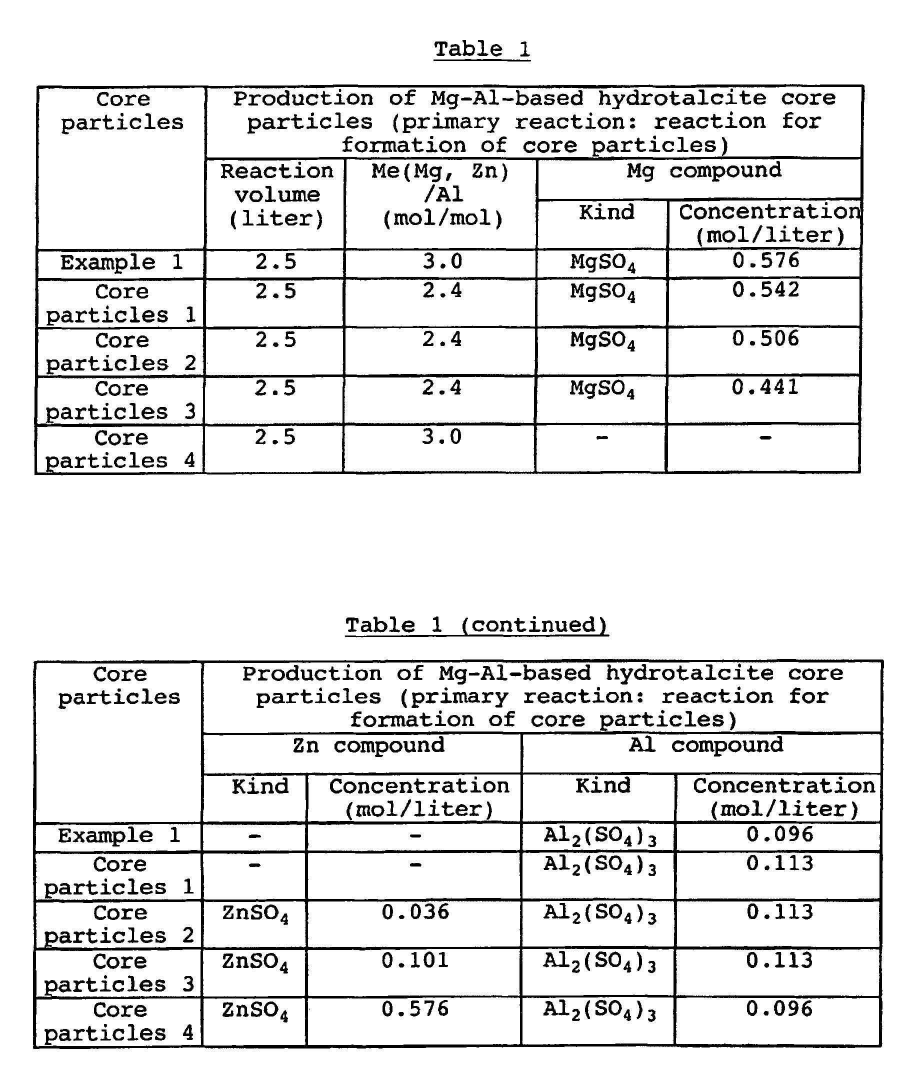

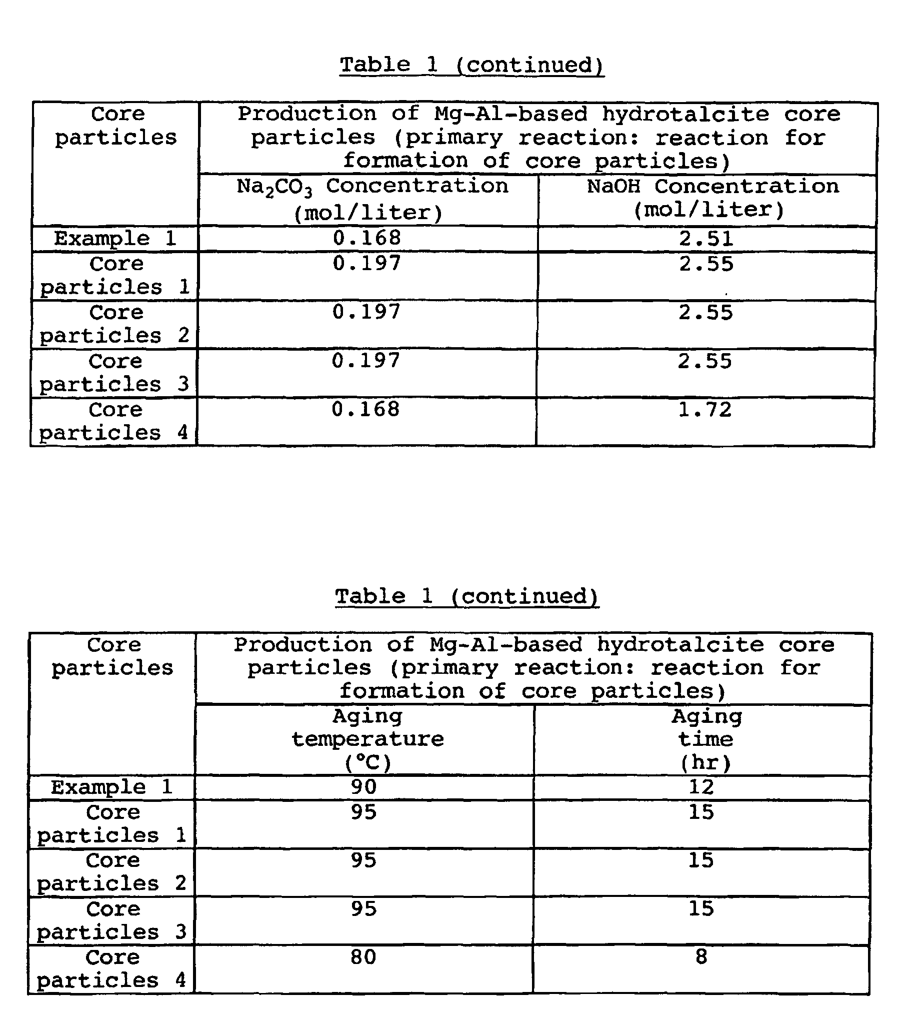

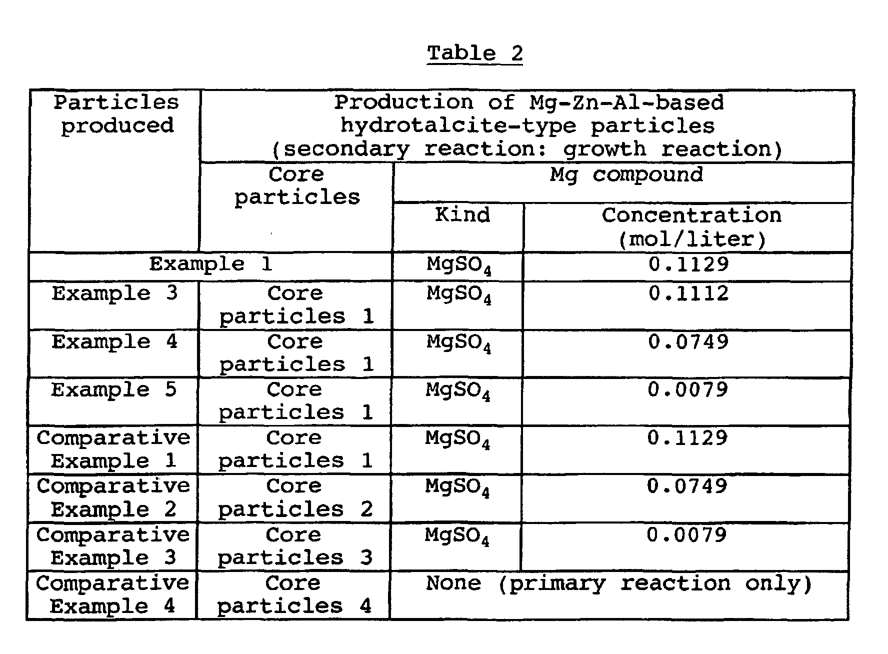

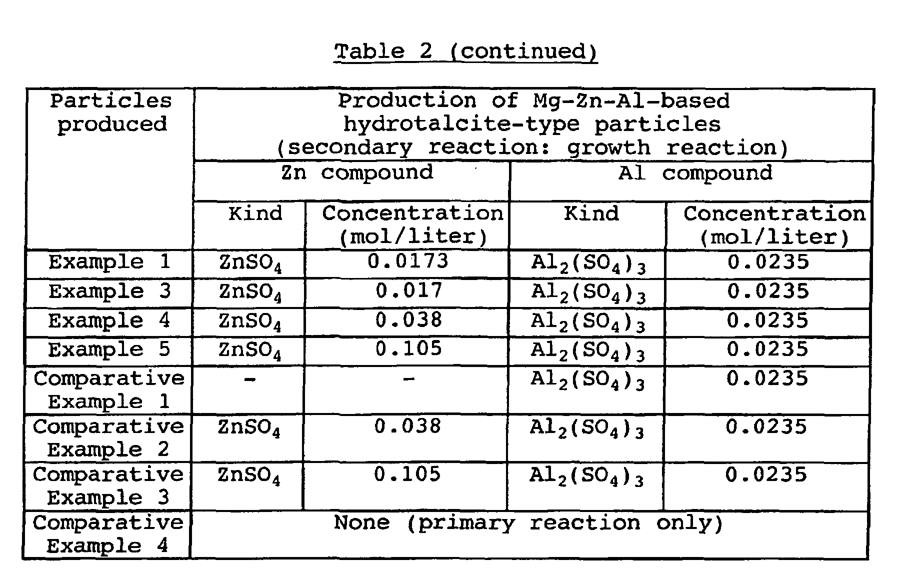

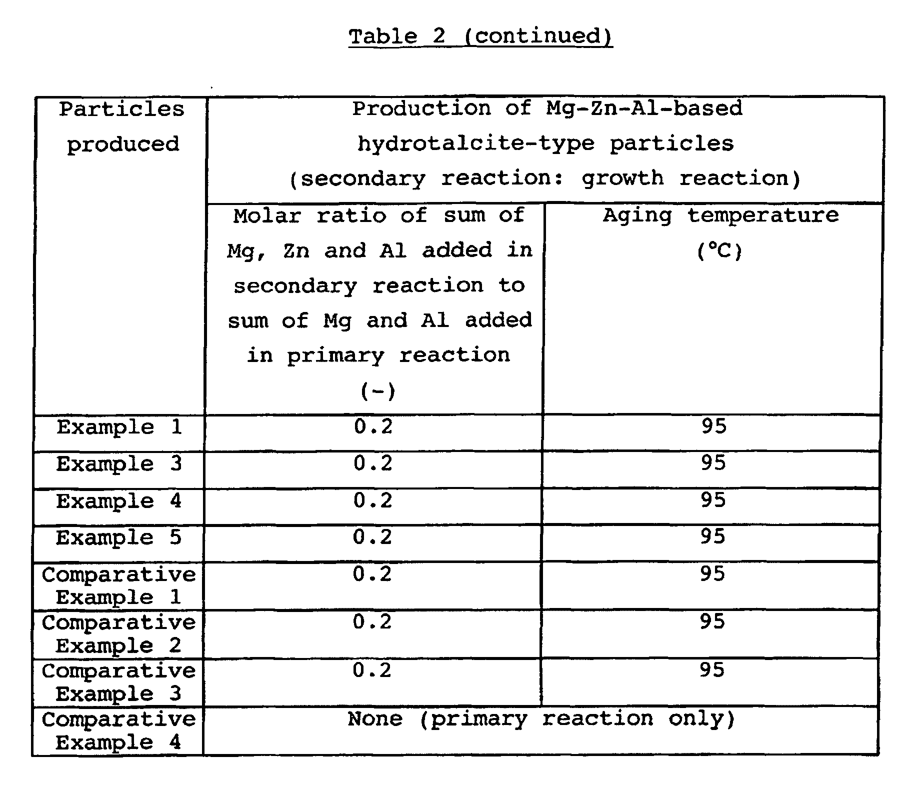

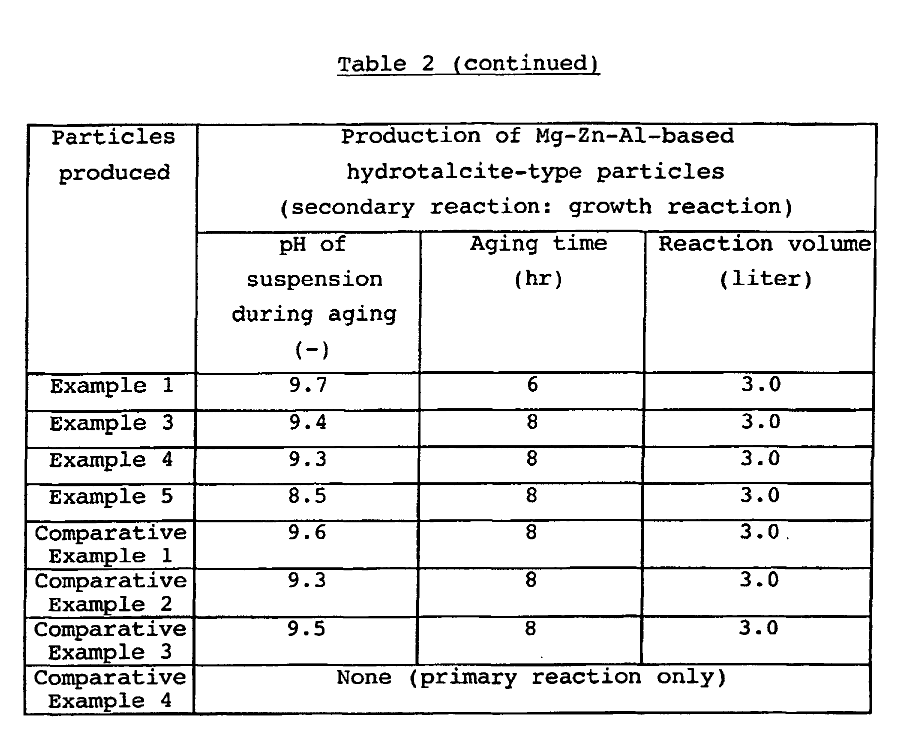

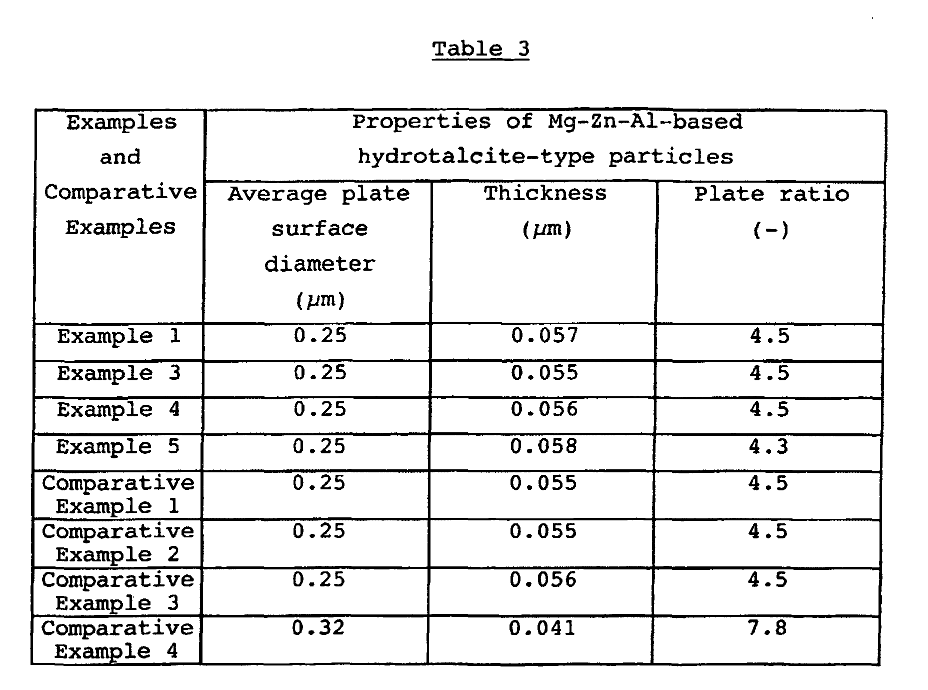

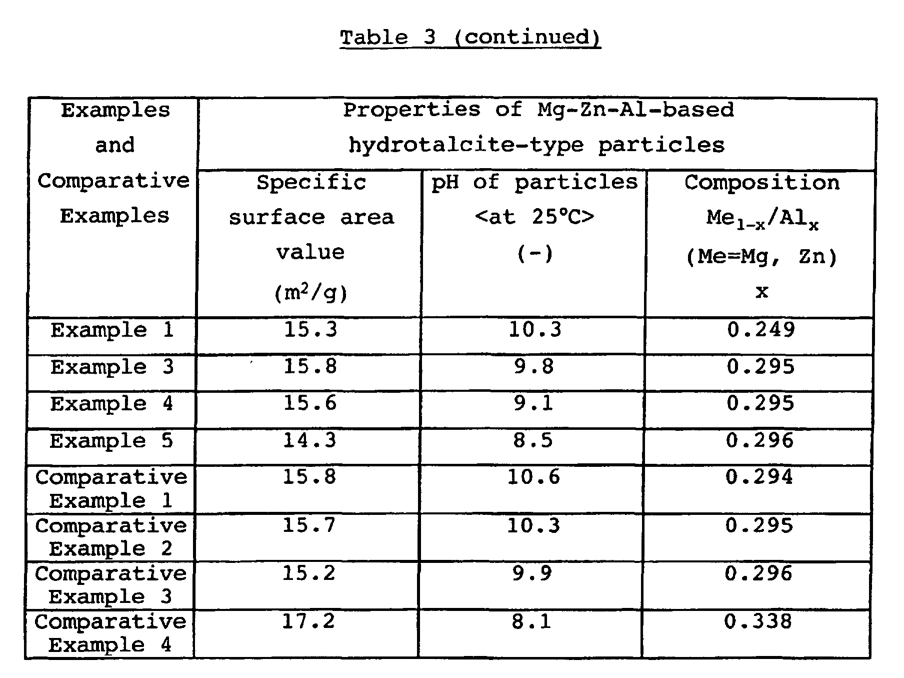

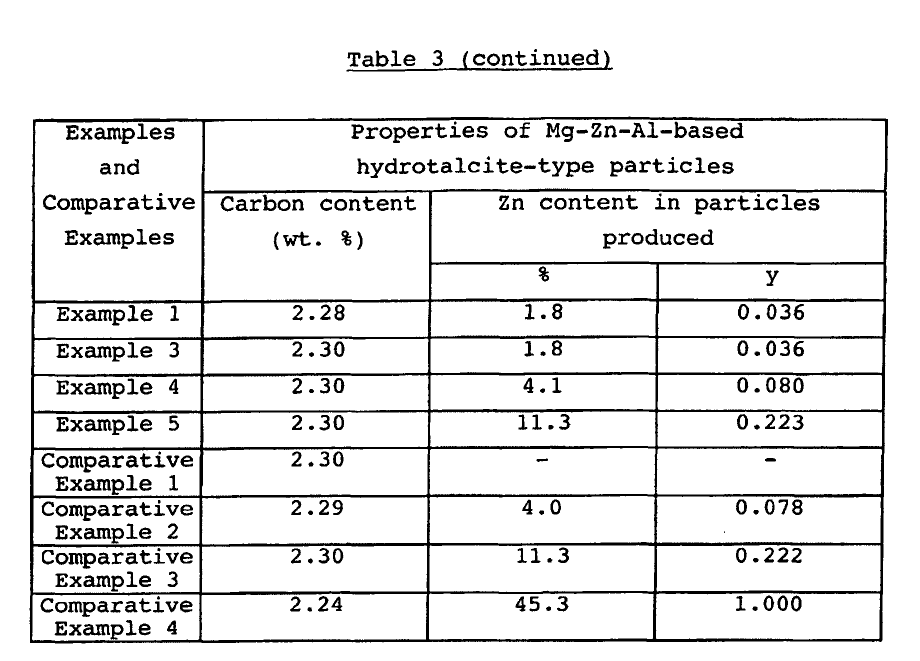

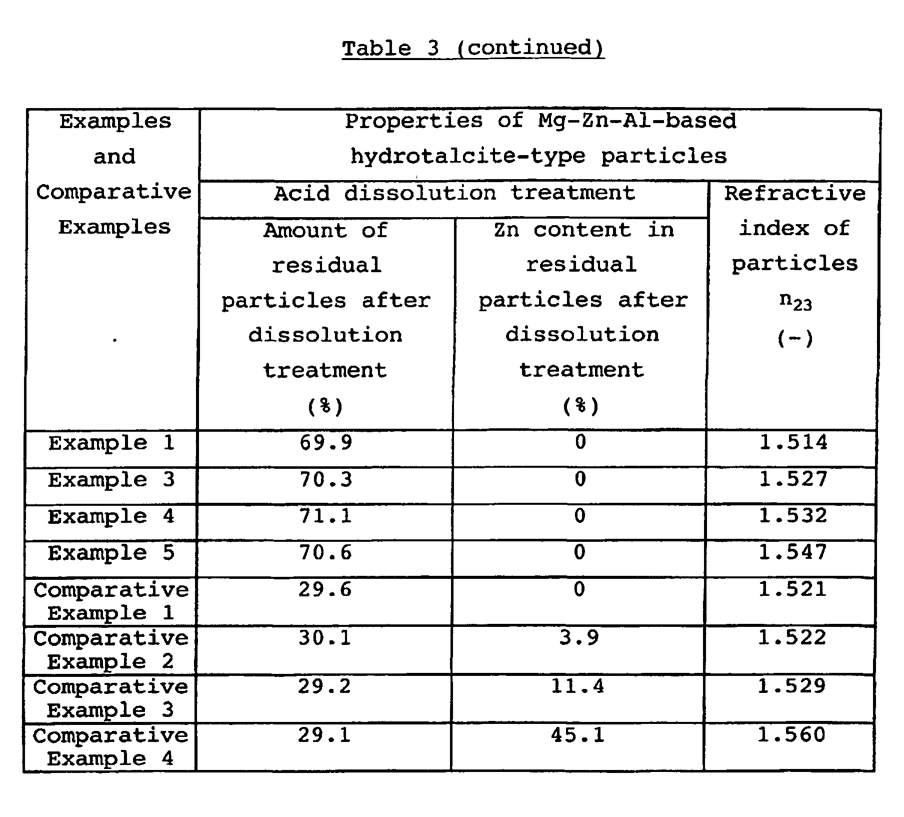

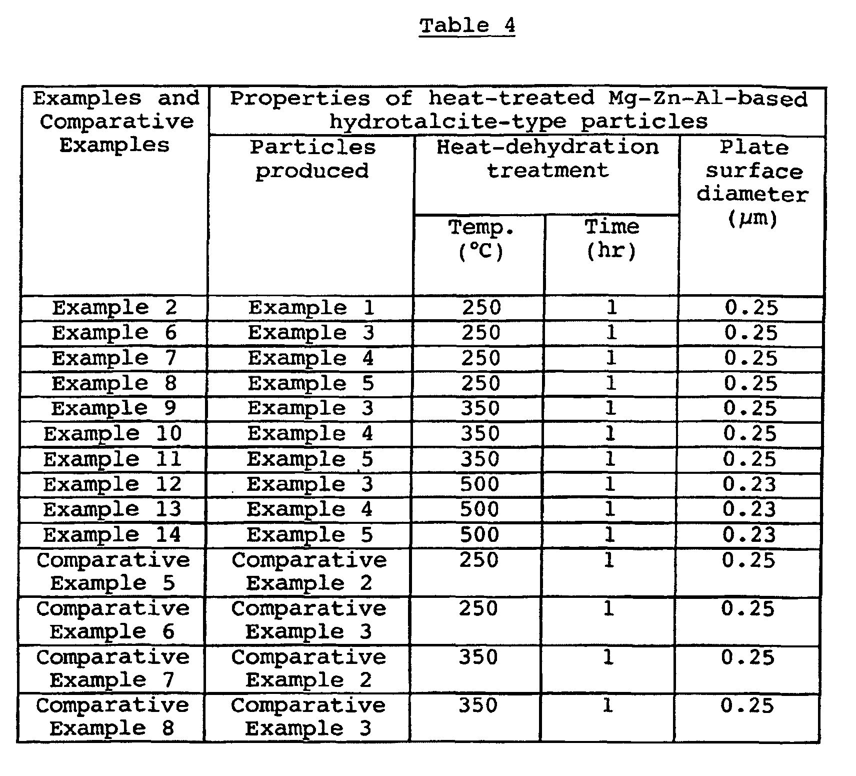

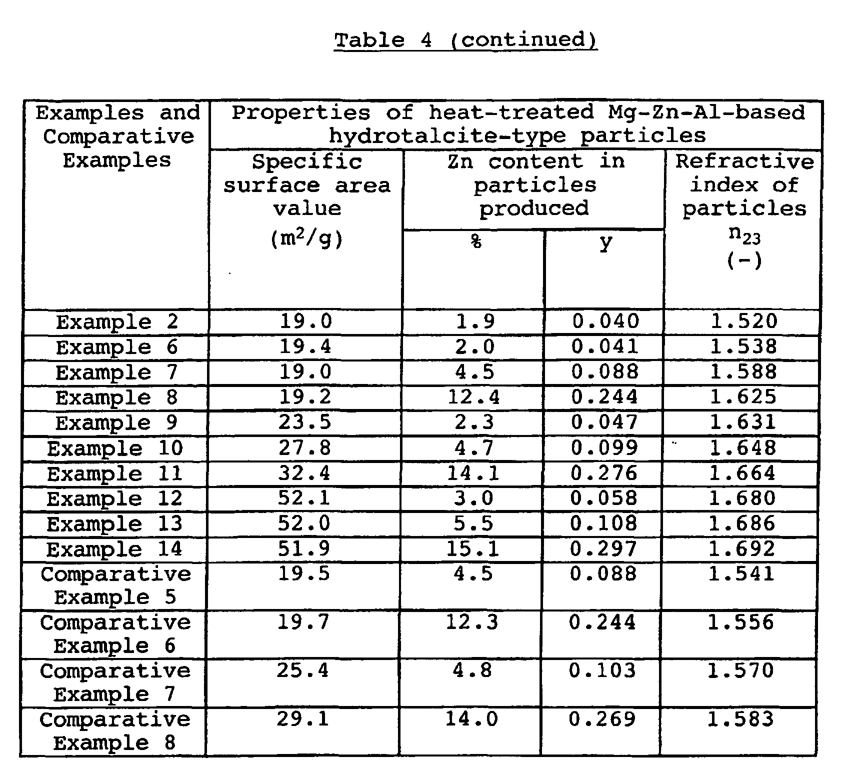

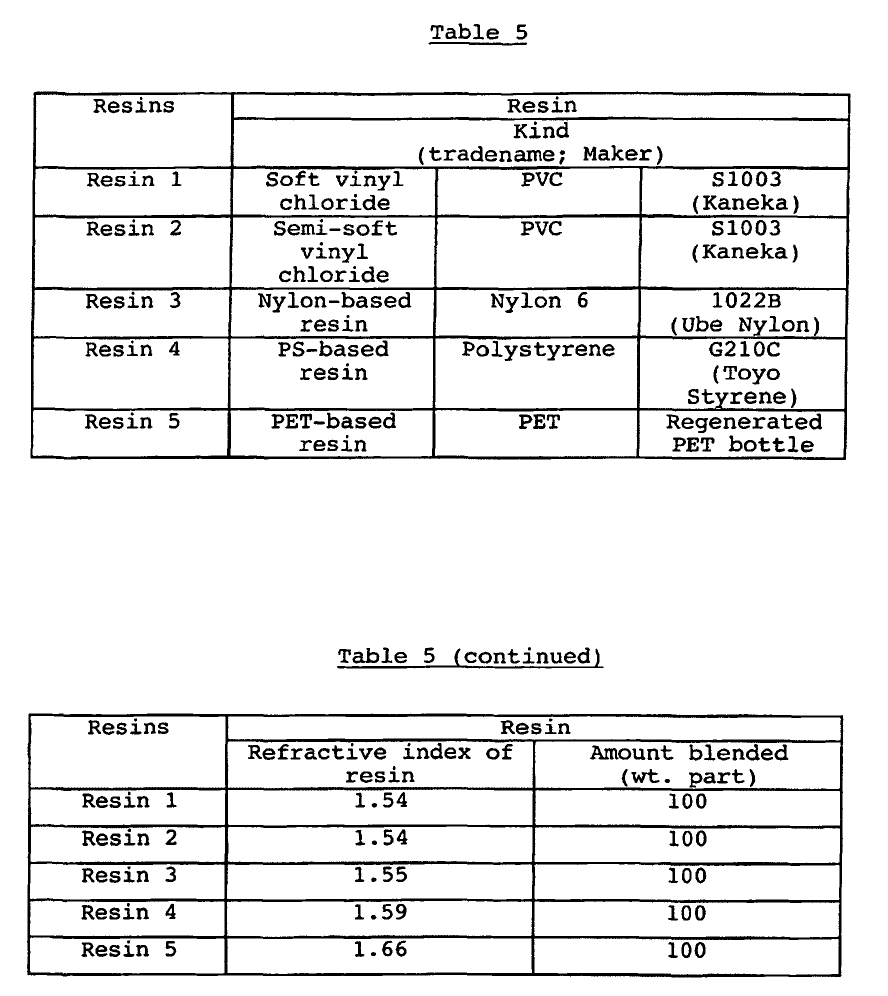

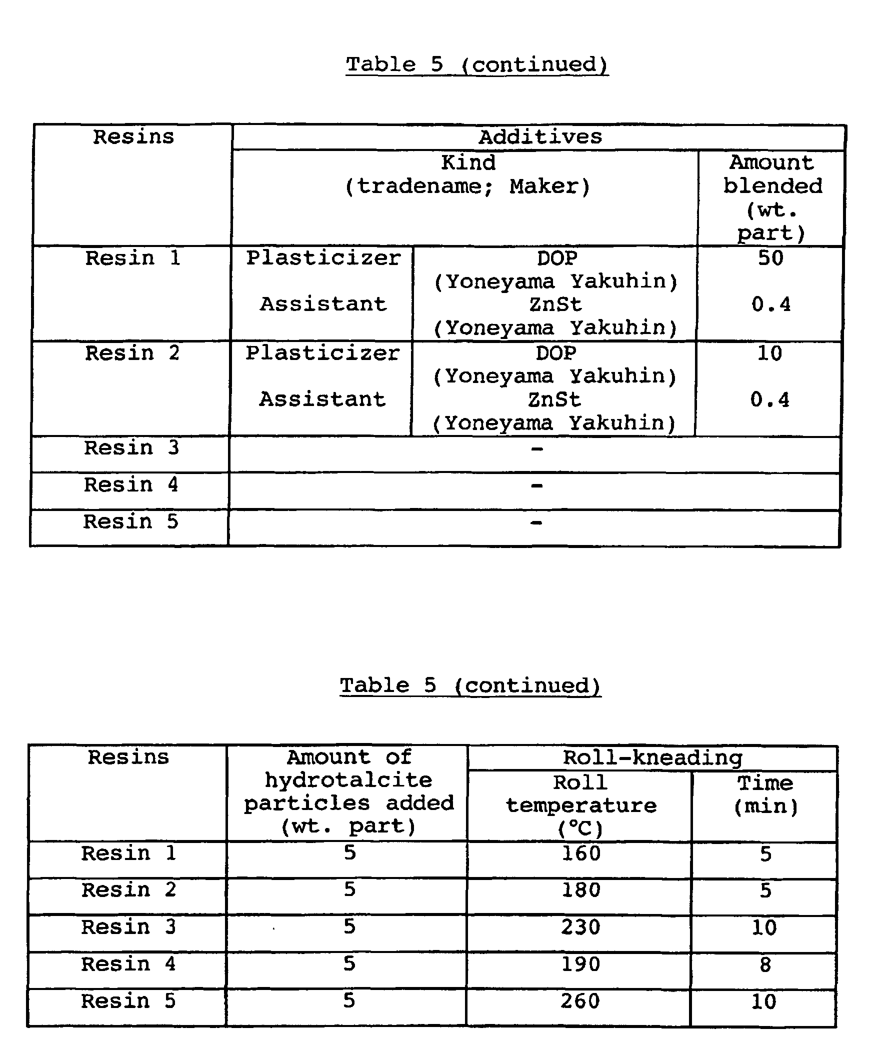

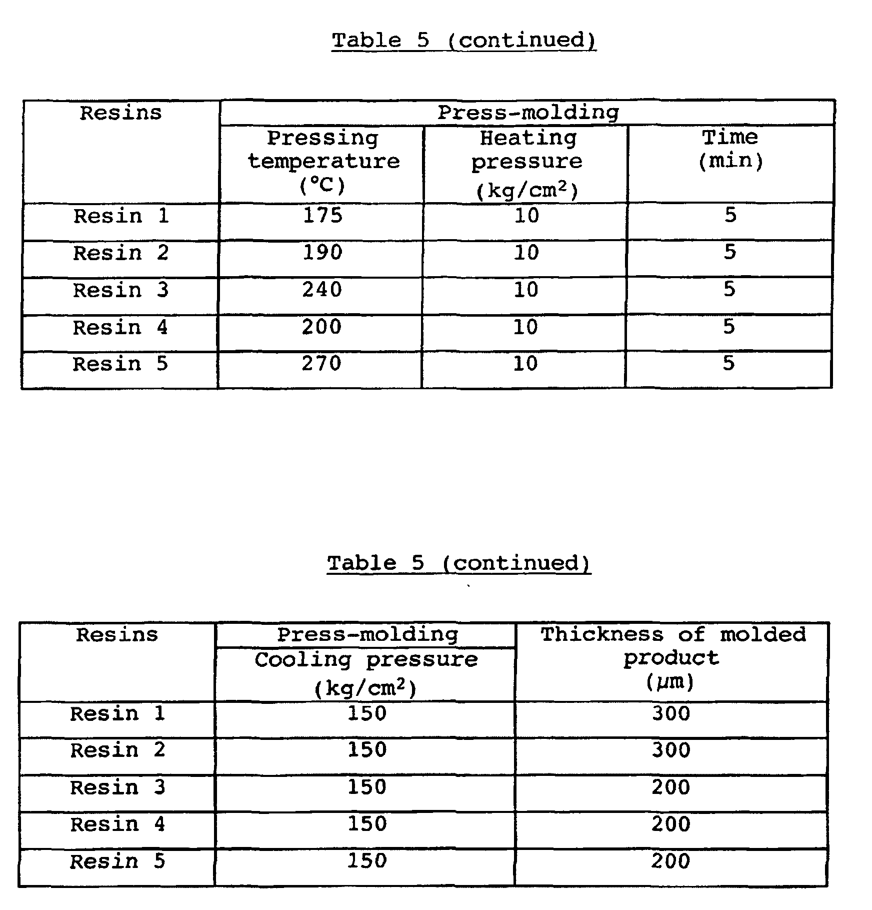

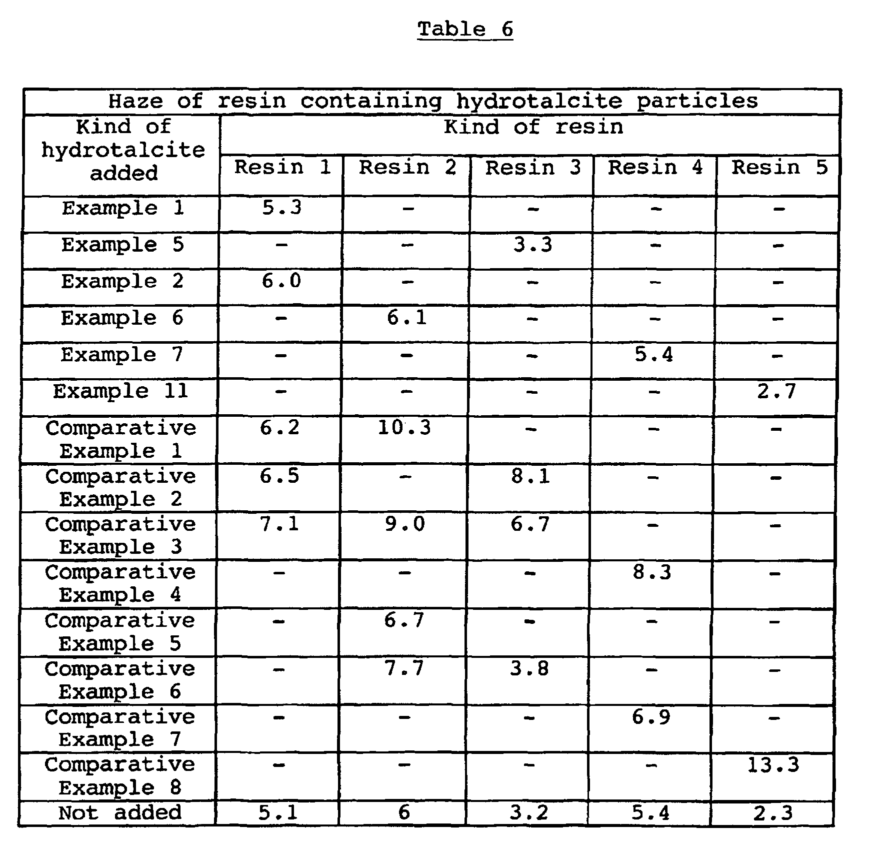

## Claims

1. Mg-Zn-Al-based hydrotalcite-type particles comprising core particles composed of Mg-Al-based hydrotalcite, and an Mg-Zn-Al-based hydrotalcite layer provided on surface of the core particles, and having an average plate surface diameter of 0.1 to 1.0 µm and a refractive index being adjustable to a required value in the range of 1.48 to 1.56.

2. Mg-Zn-Al-based hydrotalcite-type particles according to claim 1, wherein the molar ratio of zinc to a sum of magnesium and zinc contained in the Mg-Zn-Al-based hydrotalcite-type particles is in the range of 0.003 to 0.6.

3. Mg-Zn-Al-based hydrotalcite-type particles according to claim 1 or 2, having a BET specific surface area value of 5 to 60 m²/g.

4. Mg-Zn-Al-based hydrotalcite-type particles obtainable by heat-treating the Mg-Zn-Al-based hydrotalcite-type particles as defined in claim 1 and having a refractive index being adjustable to a required value in the range of 1.48 to 1.70.

5. Mg-Zn-Al-based hydrotalcite-type particles according to claim 4, having a BET specific surface area value of 7 to 100 m²/g.

6. Mg-Zn-Al-based hydrotalcite-type particles according to any one of the preceding claims, having a pH value of 8.5 to 10.5.

7. Mg-Zn-Al-based hydrotalcite-type particles according to any one of claims 1 to 5, further comprising a coating layer which is provided on surface of the Mg-Zn-Al-based hydrotalcite-type particles and which comprises at least one surface-treating agent selected from higher fatty acids, anionic surfactants, higher fatty acid/phosphoric acid esters, coupling agents and polyhydric alcohol esters.

8. Mg-Zn-Al-based hydrotalcite-type particles according to claim 7, wherein the surface-treating agent is present in an amount of 0.2 to 20.0% by weight, calculated as C, based on the weight of the Mg-Zn-Al-based hydrotalcite-type particles.

9. Mg-Zn-Al-based hydrotalcite-type particles according to claim 7 or 8, having a pH value of 7.0 to 9.5.

10. A resin composition comprising the Mg-Zn-Al-based hydrotalcite-type particles as defined in any one of the preceding claims, and a binder resin.

11. A resin composition according to claim 10, wherein the Mg-Zn-Al-based hydrotalcite-type particles are present in an amount of 0.5 to 10 parts by weight per 100 parts by weight of the resin.

## Patentansprüche

1. Partikel vom Hydrotalcit-Typ auf Mg-Zn-Al-Basis, umfassend Kernpartikel, die aus Hydrotalcit auf Mg-Al-Basis bestehen und eine auf der Oberfläche der Kernpartikel bereitgestellte Hydrotalcit-Schicht auf Mg-Zn-Al-Basis, die einen durchschnittlichen Plattenoberflächendurchmesser von 0,1 bis 1,0 µm und einen Brechungsindex aufweisen, der auf einen erforderlichen Wert im Bereich von 1,48 bis 1,56 einstellbar ist.

2. Partikel vom Hydrotalcit-Typ auf Mg-Zn-Al-Basis nach Anspruch 1, wobei das molare Verhältnis von Zink zur Summe von Magnesium und Zink, die in den Partikeln vom Hydrotalcit-Typ auf Mg-Zn-Al-Basis enthalten sind, im Bereich von 0,003 bis 0,6 liegt.

3. Partikel vom Hydrotalcit-Typ auf Mg-Zn-Al-Basis nach Anspruch 1 oder 2, die einen spezifischen BET-Oberflächenwert von 5 bis 60 m²/g aufweisen.

4. Partikel vom Hydrotalcit-Typ auf Mg-Zn-Al-Basis, erhältlich durch Wärmebehandeln der wie in Anspruch 1 definierten Partikel vom Hydrotalcit-Typ auf Mg-Zn-Al-Basis und mit einem Brechungsindex, der auf einen erforderlichen Wert im Bereich von 1,48 bis 1,70 einstellbar ist.

5. Partikel vom Hydrotalcit-Typ auf Mg-Zn-Al-Basis nach Anspruch 4, die einen spezifischen BET-Oberflächenwert von 7 bis 100 m²/g aufweisen.

6. Partikel vom Hydrotalcit-Typ auf Mg-Zn-Al-Basis nach einem der voranstehenden Ansprüche, die einen pH-Wert von 8,5 bis 10,5 aufweisen.

7. Partikel vom Hydrotalcit-Typ auf Mg-Zn-Al-Basis nach einem der Ansprüche 1 bis 5, des Weiteren umfassend eine Überzugsschicht, die an der Oberfläche der Partikel vom Hydrotalcit-Typ auf Mg-Zn-Al-Basis bereitgestellt ist und die mindestens ein Oberflächen-behandelndes Mittel, ausgewählt aus höheren Fettsäuren, anionischen Grenzflächen-aktiven Mitteln, höheren Fettsäure-/Phosphorsäureestern, Haftvermittlern und mehrwertigen Alkoholestern, umfasst.

8. Partikel vom Hydrotalcit-Typ auf Mg-Zn-Al-Basis nach Anspruch 7, wobei das Oberflächen-behandelnde Mittel in einer Menge von 0,2 bis 20,0 Gew.-%, berechnet als C, bezogen auf das Gewicht der Partikel vom Hydrotalcit-Typ auf Mg-Zn-Al-Basis, vorliegt.

9. Partikel vom Hydrotalcit-Typ auf Mg-Zn-Al-Basis nach Anspruch 7 oder 8, die einen pH-Wert von 7,0 bis 9,5 aufweisen.

10. Harzzusammensetzung, die die Partikel vom Hydrotalcit-Typ auf Mg-Zn-Al-Basis wie in einem der voranstehenden Ansprüche definiert und ein Bindemittelharz umfasst.

11. Harzzusammensetzung nach Anspruch 10, wobei die Partikel vom Hydrotalcit-Typ auf Mg-Zn-Al-Basis in einer Menge von 0,5 bis 10 Gewichtsteilen pro 100 Gewichtsteile des Harzes vorliegen.

## Revendications

1. Particules de type hydrotalcite à base de Mg-Zn-Al comprenant des particules centrales composées d'hydrotalcite à base de Mg-Al, et une couche d'hydrotalcite à base de Mg-Zn-Al disposée sur la surface des particules centrales, et ayant un diamètre de surface plate moyen de 0,1 à 1,0 µm et un indice de réfraction ajustable à une valeur requise située dans la plage allant de 1,48 à 1,56.

2. Particules de type hydrotalcite à base de Mg-Zn-Al selon la revendication 1, dans lesquelles le rapport molaire du zinc à la somme du magnésium et du zinc présents dans les particules de type hydrotalcite à base de Mg-Zn-Al est situé dans la plage allant de 0,003 à 0,6.

3. Particules de type hydrotalcite à base de Mg-Zn-Al selon la revendication 1 ou 2, ayant une valeur d'aire spécifique BET de 5 à 60 m²/g.

4. Particules de type hydrotalcite à base de Mg-Zn-Al que l'on peut obtenir par traitement à la chaleur des particules de type hydrotalcite à base de Mg-Zn-Al telles que définies dans la revendication 1 et ayant un indice de réfraction ajustable à une valeur requise située dans la plage allant de 1,48 à 1,70.

5. Particules de type hydrotalcite à base de Mg-Zn-Al selon la revendication 4, ayant une valeur d'aire spécifique BET de 7 à 100 m²/g.

6. Particules de type hydrotalcite à base de Mg-Zn-Al selon l'une quelconque des revendications précédentes, ayant une valeur de pH de 8,5 à 10,5.

7. Particules de type hydrotalcite à base de Mg-Zn-Al selon l'une quelconque des revendications 1 à 5, comprenant en outre une couche de revêtement qui est disposée sur une surface des particules de type hydrotalcite à base de Mg-Zn-Al et qui comprend au moins un agent de traitement de surface choisi parmi les acides gras supérieurs, les tensioactifs anioniques, les esters d'acide gras supérieur/acide phosphorique, les agents de couplage et les esters de polyols.

8. Particules de type hydrotalcite à base de Mg-Zn-Al selon la revendication 7, dans lesquelles l'agent de traitement de surface est présent en une quantité de 0,2 à 20,0 % en poids, calculée en C, par rapport au poids des particules de type hydrotalcite à base de Mg-Zn-Al.

9. Particules de type hydrotalcite à base de Mg-Zn-Al selon la revendication 7 ou 8, ayant une valeur de pH de 7,0 à 9,5.

10. Composition de résine comprenant les particules de type hydrotalcite à base de Mg-Zn-Al telles que définies dans l'une quelconque des revendications précédentes, et une résine liante.

11. Composition de résine selon la revendication 10, dans laquelle les particules de type hydrotalcite à base de Mg-Zn-Al sont présentes en une quantité de 0,5 à 10 parties en poids pour 100 parties en poids de la résine.
